Europäisches Patentamt

European Patent Office

Office européen des brevets

(11) Publication number: **0 573 905 A1**

# EUROPEAN PATENT APPLICATION

(21) Application number: **93108977.5**

(22) Date of filing: **04.06.93**

(51) Int. Cl.⁵: **G02B 27/28**, G02B 5/30, G02B 5/12, G02F 1/1335, G03B 21/132

(30) Priority: **08.06.92 US 895548**

(43) Date of publication of application:
**15.12.93 Bulletin 93/50**

(84) Designated Contracting States:
**DE FR GB IT**

(71) Applicant: **MINNESOTA MINING AND MANUFACTURING COMPANY**
**3M Center,**
**P.O. Box 33427**
**St. Paul, Minnesota 55133-3427(US)**

(72) Inventor: **Weber, Michael F., c/o Minnesota Mining and**
**Manufac. Company,**
**2501 Hudson Road,**
**P.O. Box 33427**
**St. Paul, Minnesota 55133-3427(US)**

(74) Representative: **Hilleringmann, Jochen,**
**Dipl.-Ing. et al**
**Patentanwälte**
**von Kreisler-Selting-Werner,**
**Postfach 10 22 41**
**D-50462 Köln (DE)**

(54) **Retroreflecting polarizer for presentation systems.**

(57) A presentation system includes a liquid crystal display (LCD) panel, an overhead projector (OHP) for projecting images produced on the LCD panel, and a retroreflecting polarizer interposed between the LCD panel and the light source of the OHP. The retroreflecting polarizer transmits the p-polarization component of the light, but reflects the s-polarization component. The polarizer may be attached to either the stage of the OHP or the bottom of the LCD panel. A quarter-wave retardation plate may be used to convert the retroreflected s-polarization component into p-polarized light, which may then be recycled through the polarizer. The polarizer may also be tuned to specific wavelengths, for color LCD panels, to replace dichroic dyed polarizers.

*Fig. 5A*

## Background of the Invention

### 1. Field of the Invention

The present invention generally relates to visual presentation systems, and more particularly to a liquid crystal display panel for overhead projector utilizing a thin, retroreflecting polarizer. A possible retroreflecting polarizer is described in WO 92/22838 which has a priority date of June 13, 1991 but was published at December 23, 1992. The disclosure of this PCT-publication is included herewith by cross-reference.

### 2. Description of the Prior Art

A MacNeille polarizer comprises alternating repeating layers of a pair of thin film materials deposited on a bulk substrate material. The pair of thin film materials comprises one low refractive index material and one high refractive index material. The indices, called a MacNeille pair, are chosen such that, for a given angle of incidence of a light beam, the reflection coefficient for p-polarized ligth ($r_p$) is essentially zero at each thin film interface. The angle at which $r_p$ is zero is called the Brewster angle, and the formular relating the Brewster angle to the numerical values of the indices is called the MacNeille condition. The reflection coefficient for s-polarized light ($r_s$) is non-zero at each thin film interface. Therefore, as more thin film layers are added the total reflectivity for s-polarized light increases while the reflectivity for p-polarized light remains essentially zero. Thus, an unpolarized beam of light, incident upon the thin film stack, has some or all of the s-polarized components reflected while essentially all of the p-polarized component is transmitted.

Such a thin film stack is deposited on two general types of substrates, which then classifies the type of polarizer produced as either immersed or non-immersed. For example, if the thin films are deposited on a flat face which forms the hypotenuse side of a right angle (Porro) prism, and the films are bonded to the similar side of an identical prism, the polarizer is an immersed polarizer. If the thin films are bonded between two planar slabs of transparent media, the polarizer is a non-immersed polarizer. In general, a polarizer is non-immersed if the geometry of the bulk encapsulant does not affect the immersion constant $n_i \ast \sin(\theta_i)$ of the light beam in a thin film material $m_i$.

For either immersed or non-immersed polarisers, the p-polarization component of an incident light beam is transmitted, while the s-polarization component is reflected from the thin film stack at an angle equal to the angle of incidence. The total change in direction of the s-polarization component from the incident direction is 90° for cube polarizers and usually about 60° for slab polarizers. Thus, the s-polarization component is typically unavailable for further use, leading to a decrease in overall intensity of light available, unless additional optics are employed to redirect the s-polarization component.

One particular device which would benefit from recycling of the s-polarization component is a liquid crystal display (LCD) panel, such as those commonly used with laptop computers and overhead projectors (OHP's). These panels have at least one polarizing sheet which, during use, is positioned between the source of illumination and the liquid crystal material itself. Therefore, more than 50% of the unpolarized light from the light source is unusable by the LCD panel, resulting in reduced illumination and increased heat dissipation, which can further adversely affect the quality of any projected image. These problems are compounded in certain color LCD panels, such as those shown in U.S. Patent Nos. 4,917,465 and 4,966,441, which use up to four polarizers in the panel stack.

Methods have been devised for recycling the reflected s-polarization component, as exemplified in U.S. Patent No. 4,913,529. That patent discloses an LCD television projection system using two reflectors, a polarization rotator and a prism to recombine both polarization components. Such systems, however, are undesirably large for use in many common visual display systems, such as overhead projectors, and especially in portable or laptop computer displays where a thin profile is desired. It would, therefore, be desirous and advantageous to devise a thin, retroreflecting polarizer for a presentation system such as an overhead projector to minimize heat buildup, and which could optionally be used with an optical recycling system to provide an increased amount of light usable by LCD panels.

## Summary of the Invention

The invention generally comprises a presentation system, such as an overhead projector or a liquid crystal display panel, which utilizes a retroreflecting polarizer. In the case of an overhead projector, the retroreflecting polarizer is positioned between the light source of the OHP and the stage of the OHP. For LCD panels, the polarizer is positioned at the bottom or back of the panel (closest to the panel's source of illumination.

In the preferred embodiment, the polarizer comprises a first substrate having a linear array of isosceles prisms arranged side by side, and a second substrate preferably identical to the first substrate, there being at least one optical stack of alternating layers of high and low refractive index materials of selected optical thicknesses on one of the structured surfaces of the substrates. The first and second substrates are optically cemented to form a single unit in which the refractive index of the first and second substrates, and the refractive indices and optical thicknesses of the layers of the optical stack, are all chosen to produce selective reflection of polarized light, such that within one portion of the optical stack, an incident light beam of mixed polarization is separated into an s-polarized component and a p-polarized component, the s-polarized component is reflected onto another portion of the optical stack and there reflected parallel to the incident beam but proceeding in an opposite direction, and the p-polarized component is transmitted parallel to the incident beam.

The polarizer may be advantageously combined with a quarter-wave plate (positioned between the polarizer and the light source) and a light recycling system whereby the polarization of the s-component of the light is shifted as it is reflected by the polarizer and passed back through the quarter-wave plate, and shifted a second time as it passes again through the plate toward the polarizer, thereby converting the s-component to usable p-polarized light. This results in increased light transmission through the LCD panel as well as reduced heat buildup. The polarizer may also be "tuned" to a specific wavelength of light to impart color selectivity.

## Brief Description of the Drawings

The novel features and scope of the invention are set forth in the appended claims. The invention itself, however, will best be understood by reference to the accompanying drawings, wherein:

Figure 1 is a cross sectional view of a portion of one preferred embodiment of the invention;

Figure 2 is an enlarged sectional view of a portion of the embodiment of Figure 1;

Figure 3 is a schematic side view of an optical system employing the invention;

Figure 4 is a graph of the transmissivity and reflectivity of light incident upon one embodiment of the invention;

Figures 5A and 5B are schematic side views of an overhead projector utilizing the polarizer of the present invention;

Figure 6 is a schematic side view of an exemplary liquid crystal display panel utilizing the polarizer of the present invention; and

Figure 7 is a graph of a computer model of s- and p-polarized light passing through a magenta polarizer of the present invention.

## Description of the Preferred Embodiment

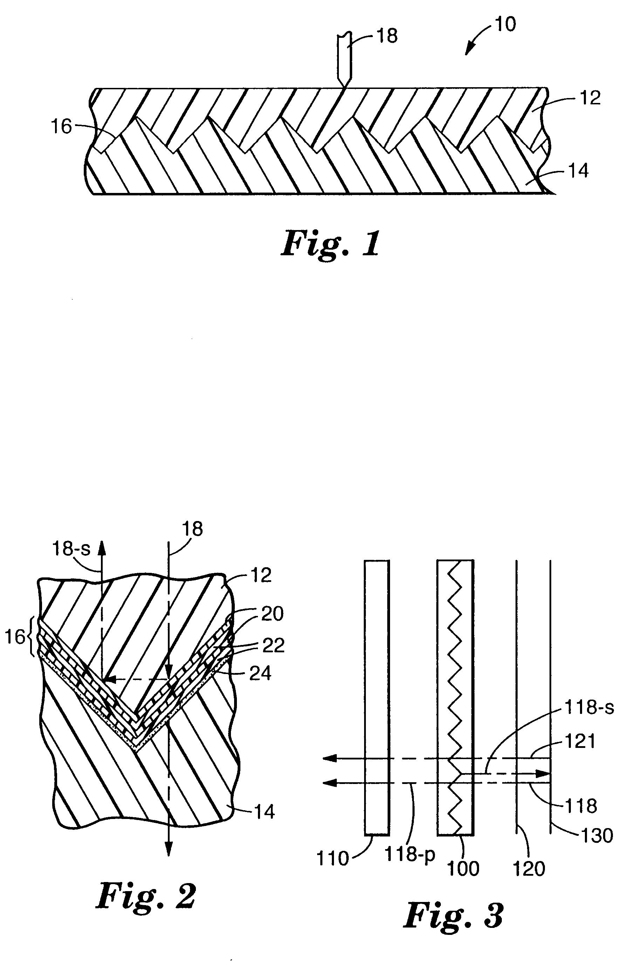

Figures 1 and 2 show an inventive retroreflecting polarizer **10**, comprising two pieces of transparent substrate material **12** and **14**, between which is a composite optical stack **16**. The pieces **12**, **14** each have structured surfaces (which face each other), and non-structured surfaces. As shown, piece **12** is a top layer and piece **14** is a substrate, but the entire assembly may be inverted with no loss of functionality, essentially interchanging the roles of the two pieces.

In the embodiment shown, the composite optical stack **16** is deposited upon the structured surface of the upper piece **12**, and the structured surface of the lower piece **14** is optically cemented (i.e., adhered by a very thin layer of transparent adhesive) to the composite optical stack **16** by an adhesive **24** to form a single unit. However, the composite optical stack could comprise two substacks, one sub-stack deposited on the top layer and the other deposited on the substrate, with adhesive **24** between the two sub-stacks.

The composite optical stack comprises at least one set of pairs of alternating layers of materials having low and high indices of refraction compared to each other. The thicknesses of the layers are chosen such that the quarterwave criterion is met for the wavelength of the incident collimated light beam **18** by each of layers **20** and **22**. In systems where the light is not collimated (such as backlit LCD panels for laptop computers), additional thin-film stacks may be required to handle light coming from different angles or, alternatively, a standard polarizer may be used to clean-up any s-polarized light leaking through the retroreflective polarizer. The shape of the structured surfaces, the optical properties of the substrate material, and the properties of the composite optical stack, all combine to divide the incident light beam into two polarization components. One component, **18-s**, is reflected twice in such a manner as to be retroreflected, i.e., directed back toward the source of light beam **18**. The other component, **18-p**, is transmitted parallel to incident beam **18**. In Figure 2, the division of incident light **18** into components **18-s** and **18-p** is shown as occurring at the first interface between the substrate and the composite optical stack, but this is illustrative only. Actually, some division occurs at each interface between thin films, with the net result being as shown. The s- and p-components are defined with respect to the plane of incidence on the prism facets, i.e., with respect to the thin film stacks.

In the embodiment shown, the composite optical stack comprises a repeating stack of a pair of materials. One of the materials is a relatively low refractive index ($n_L$) material **20**, and the other is a relatively high refractive index ($n_H$) material **22**. The construction of such a stack **16** having two pairs of these films is abbreviated $(HL)^2$. In general, more layers are used, such as a $(HL)^5$ stack (five pairs of films), and generally the average optical thickness of each material is a quarterwave thick, with reference to a chosen wavelength of interest (typically but not necessarily in the visible spectrum). However, to optimize performance, the individual thicknesses of all thin film layers are varied slightly from the average thickness, in accordance with known principles, using commercially available software to calculate the desired values. Also, more than two pairs of materials or average thicknesses may be used, such as a $(H_1L_1)^5 + (H_2L_2)^5$. This would be done to extend the useful optical bandwidth of the invention or the range of angles over which the invention reflects essentially all s-polarized light.

Each of substrate pieces **12** and **14** comprises a transparent, preferably integral (i.e., a single continuous piece as opposed to an assembly or a laminate) material having a structured surface which consists of a linear array of substantially right angle isosceles prisms arranged side by side (parallel). The perpendicular sides of each prism make an angle of approximately 45° with respect to the smooth surface opposite the structured surface (or, in the most general case of a flexible substrate, with respect to the tangent to the structured surface). Angles other than 45° are useful for other applications, but angles near 45° (e.g., 40° to 50°) are preferred in this invention. This places a constraint on the design of the optical stack: only two of the three indices of refraction ($n_L$ and $n_H$ for the optical stack, $n_O$ for the substrate pieces) can be chosen independently. (An additional implication is that $n_L$ must always be less than $n_O$ if high transmission of the p-component is desired at all wavelengths.) These values are determined by the MacNeille condition relating the Brewster angles of each material interface to the numerical values of the indices of the materials forming the interface:

$$\tan(\theta_L) = (n_H/n_L)$$

or

$$\tan(\theta_H) = (n_L/n_H)$$

along with Snell's law relating $\theta_O$ to $\theta_L$ and $\theta_H$.

In theory, an infinite set of values of $n_H$ and $n_L$ exist for a given $n_O$, but in practice, the available choices of materials for the substrate pieces and thin films are limited, and design of the invention reduces to choosing which of the limited set of values of $n_H$ and $n_L$ around that value of $n_O$ will produce the desired results. The greater the difference between $n_L$ and $n_H$, the wider the optical bandwidth over which the invention will divide incident light into separate polarizations for a given number of film stacks.

A suitable thickness of the substrate is 0.36 millimeters, measured from the smooth surface to the highest point of the grooves. Suitable groove heights (measured perpendicularly) are 0.18 mm. For such a film, about 28 peaks per centimeter is preferred, but there is wide latitude in the dimensions.

Preferred substrate materials are flexible, homogeneous, and isotropic. Suitable materials include commercially available acrylics and polycarbonates having nominal indices of refraction of 1.49 and 1.59, respectively. Other possible materials, selected to provide the required functionality, include polypropylenes, polyurethanes, polystyrenes, and polyvinylchlorides. Higher index materials include polysulfone (and variations such as polyethersulfone and polyarylsulfone), polyethylene terephthalate (PET), and polyethylene napthalate (PEN). The sulfones require high processing temperatures, but in turn can withstand higher ambient temperatures in use. PET and PEN may crystallize or exhibit birefringence depending on the process parameters. All of these materials have indices in the range of 1.63-1.65 and, as such, allow the use of the film pair $SiO_2/TiO_2$ while retaining high transmission of p-polarized light. Generally, polycarbonates are preferred for their relatively high indices of refraction, clarity, and physical properties. These materials are taught in U.S. Patent No. 4,805,984, but in this invention the total internal reflection property of that material is not relevant, because the optical properties of the material are significantly changed when it is employed in this invention.

Suitable materials for the thin films **20** and **22** include any materials which are transparent (exhibit low absorption) in the spectrum of interest. For broadband visible light, suitable thin film materials are silicon dioxide ($SiO_2$, $n = 1.45$); amorphous hydrogenated silicon nitride (a-SiN:H, $n = 1.68\text{-}2.0$); titanium dioxide ($TiO_2$, $n = 2.2\text{-}2.5$); magnesium fluoride ($MgF_2$, $n = 1.38$); cryolite ($Na_3AlF_6$, $n = 1.35$); zirconium oxide ($ZrO_2$, $n = 2.05$); hafnium oxide ($HfO_2$, $n = 2.0$); aluminum nitride (AlN, $n = 2.2$); and zinc sulfide (ZnS, $n = 2.1 \text{ - } 2.4$).

Several thin film deposition techniques can be used to deposit the composite optical stack on the substrate. Thermal and electron beam evaporation, and ion beam sputtering are the methods of choice for precision optical coatings, the latter method producing superior films in terms of adhesion to the substrate, hardness, and environmental stability. Magnetron sputtering is also used extensively for broadband coatings such as anti-reflective coatings on glass, and especially for large area applications such as architectural glass. However, on the whole, thermal and electron beam evaporation should provide good thin film qualities and sufficiently high deposition rates for acceptable manufacturing rates. More importantly, low index films such as magnesium fluoride and cryolite can be deposited by this method. Electron beam deposition is regularly used in the coatings industry for high index materials such as titanium dioxide, zirconium oxide, hafnium oxide, and aluminum nitride.

An additional consideration is to ensure the uniform coating of the prism faces, from peak to valley. Any process that includes scattering of incident molecules via gas phase collisions will invariably cause the coating to be thicker on the peaks than in the valleys, but two ranges of gas pressure can be used successfully. The low pressure regime used in high vacuum evaporation will provide the most uniform coating. High pressures used in PACVD or CVD (see below), such that the gas-molecule mean-free-path is much less than the peak-to-valley distance, will also provide a relatively uniform coating. The latter method may be incapable of producing a sharp band edge such as that required in a (good) color polarizer, but would be sufficient for a broad band polarizer. For the exemplary prism dimensions given here, pressures of 1 Torr or greater would be desirable. The more nonuniform the layers are, a greater number of film layers are required to produce good s-polarization reflection over the entire desired bandwidth (usually 400 to 700 nm).

The process used in the reduction to practice of the invention was plasma assisted chemical vapor deposition (PACVD). Using this PACVD, the following procedures and resultant products are possible. $SiO_2$ may be deposited by reacting silane ($SiH_4$) or almost any organosilane in the PACVD process with oxygen or nitrous oxide at between 50 and 250 milliTorr, using low power RF plasmas of about 50-100 watt/$ft^2$ of electrode area. Nitrous oxide is somewhat preferred because it generally results in less powder formations in the gas phase. $TiO_2$ may be formed by reacting titanium tetrachloride ($TiCl_4$) with oxygen and nitrous oxide at the same power levels. By varying both the relative and absolute flow rates of the $O_2$ and $N_2O$ for a given flow of $TiCl_4$ vapor, the index of refraction of the film is easily varied, from 2.0 to 2.4. Residual chlorine in the film can result in poor adhesion to polycarbonate. An oxygen flow of several times in excess of the reactant gas is preferred.

The visibly transparent a-SiN:H material has an index of refraction which varies mainly as a function of deposition temperature, with the higher indices requiring temperatures of 250° Celsius or more. The films may be deposited from mixtures of silane, ammonia, and nitrogen. Films formed at lower temperatures from conditions suitable for high index films (i.e., silane, starved nitrogen, no ammonia) produce undesirably high absorption of blue light. It is possible to form films having indices between 1.68 and 1.8 on polycarbonate below 100 C, with low optical absorption, although the lower index films are somewhat brittle.

The PACVD process was carried out using a deposition system according to the teachings of U.S. Patent Nos. 4,841,908 and 4,874,631. Briefly, this multi-chamber deposition system employs a large volume vacuum chamber within which are plurality of deposition chambers for different composition layers, each chamber having separate seals to minimize back diffusion of any dopant gases from adjacent deposition chambers. A continuous roll of substrate proceeds from a supply roll through each of the deposition chambers and onto a finished take-up roll. The direction of web travel is reversed repeatedly to produce the multiple layers of repeating refractive index materials.

The index of refraction ($n_A$) of the adhesive 24 should match that of the upper piece **12** as closely as possible. When the index of the adhesive is less than that of the adjoining piece, the non-zero thickness of the adhesive leads to some refraction of light away from the original beam direction. The refractive loss occurs near the prism peaks, and is proportional to the thickness of the adhesive and the index mismatch. Light entering parallel, adjacent prism facets is not refracted from its original direction; however, light rays exiting a prism face near a peak can be refracted such that they enter a neighboring perpendicular facet. These rays are then refracted out of the original beam direction. Adhesives of $n_A = 1.56$ are available. Suitable adhesives include the optical cements sold by Norlund Products, Inc., of New Brunswick, New Jersey under numbers 61 and 81 ($n_A = 1.56$), and an ultraviolet curable resin ($n_A = 1.50$) made from an epoxy (available from Union Carbide Corp. of Danbury, Connecticut, under number ERL 4221) mixed with 1% (by weight) sulfonium salt initiator (available from Minnesota Mining and Manufacturing Company of St. Paul, Minnesota (3M--assignee of the present invention) under number 41-4201-91185). The initiator is dissolved in methylene chloride which must be evaporated off before mixing with the epoxy. UV curable adhesives may cause slight absorption, mainly in the blue end of the spectrum, in the completed polarizer of about 1-2%. Any adhesive or epoxy that has high optical index, low optical absorption and low scattering will suffice.

Example

Alternating thin film layers of matched quarterwave optical thickness were coated on the structured side of a 14 mil thick polycarbonate version of the preferred substrate material described in U.S. Patent No. 4,805,984. In Example 1, coating was done by the plasma assisted chemical vapor deposition (PACVD) process described above, using a 5 inch wide and 8 inch long gas "showerhead" type electrode. To form the retroreflective polarizer, an uncoated piece of the TIR material was adhered to the optical stack with an optical adhesive.

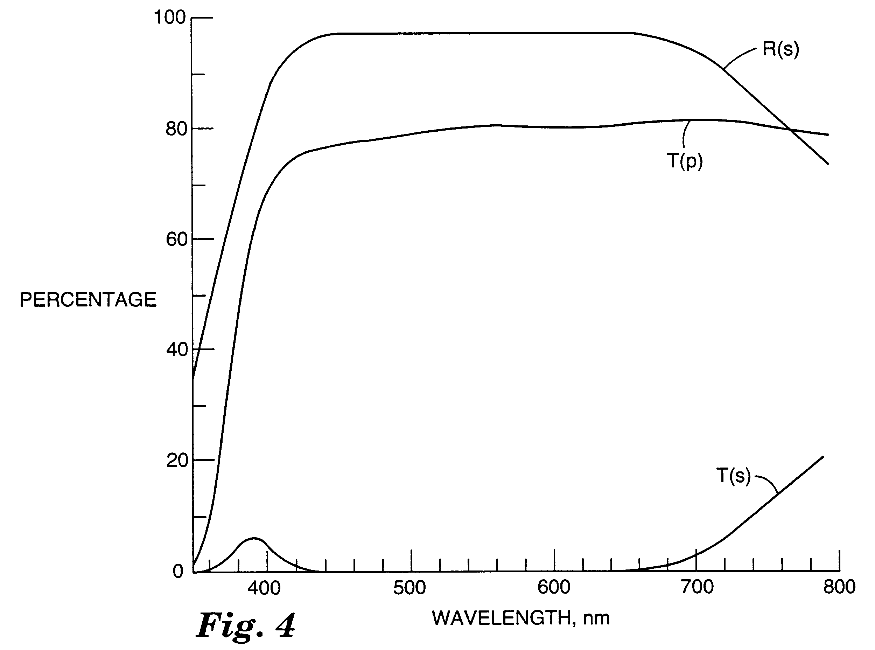

In Example 1, the polarizer had three optical stacks, each having twelve layers, either silicon dioxide ($SiO_2$) or titanium dioxide ($TiO_2$). The unusually high number of layers was required because the PACVD technique as described above did not produce a uniform film thickness near the prism peaks as opposed to the bottoms of the grooves. The first stack had a quarterwave thickness centered at 400 nm, the next centered at 550 nm, the third centered at 700 nm. The polarizer performance is shown in Figure 4. Transmissivity of the s-polarization component, T(s), was at or near zero throughout nearly all the visible spectrum, while reflectivity of that component, R(s), approached the 95% level typical of the most efficient common reflectors. Transmissivity of the p-polarization component, T(p), was very acceptable, nearly 80% or more throughout the visible spectrum.

Applications

The invention is suitable for applications requiring polarized light that would benefit from increasing the intensity of the polarized light available from an unpolarized source, and especially those requiring polarized light over relatively large areas and/or in relatively compact (especially thin) applications.

For example, the inventive retroreflecting polarizer can be combined in a very simple manner with a quarterwave retardation plate and a reflector to recombine the two components of an incident light beam into a single polarized component of light. Such a theoretical arrangement is shown in Figure 3. A combined reflector and source of incident light 118 is illustrated schematically as 130. Incident light 118, having mixed polarization, is not affected by quarterwave retardation plate 120, but is split into components 118-p and 118-s by retroreflecting polarizer 100. Component 118-p is transmitted directly to display device 110. Component 118-s is retroreflected through a quarterwave retardation plate 120 and reflected back through quarterwave retardation plate 120 again (the recycled component is displaced transversely upward in Figure 3 for clarity as ray 121),. The two passes through the quarterwave retardation plate represent a total rotation of 90°, i.e., component 118-s now has the same polarization direction as component 118-p, and is also directed toward display device 110, thus nearly all of the intensity of incident unpolarized light 118 is available in polarized form at display device 110.

The great advantage of the invention in this system is that because all components may be relatively thin and large in area, and lie on essentially the same optic axis, the profile of the system can be greatly reduced. Where reduction in profile is not as much a concern, or where convenient for other reasons, the optic axis can be redirected without loss of generality.

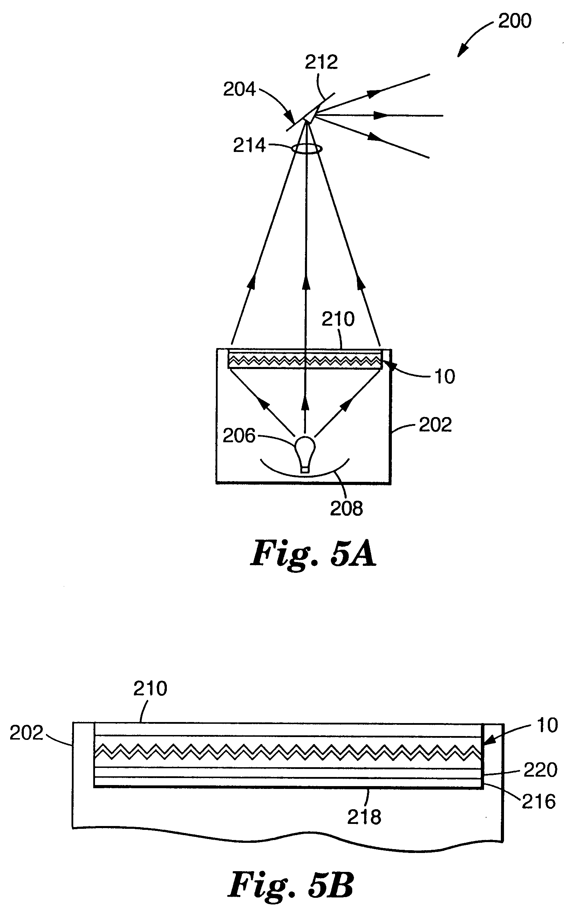

With reference now to Figures 5A and 5B, there is schematically illustrated an overhead projector (OHP) 200 which incorporates the retroreflecting polarizer 10. In the preferred embodiment, OHP 200 is a transmissive-type projector, and has many of the features of a conventional overhead projector, including a base 202 and a projection head 204, attached to base 202 by an arm (not shown), which may be raised or lowered, i.e., moved toward or away from base 202, by conventional adjustment means.

Base 202 houses a light source 206, a power supply (not shown) for light source 206, and appropriate optical components (such as a mirror 208) for directing the light towards a stage area 210 which, in a conventional OHP, comprises a transparent sheet of, e.g., glass, typically having at least one fresnel lens integrally formed therein (for focussing the light toward head 204. If a transparency having a visual image is placed on stage 210, the image is collected and projected (to a nearby projection screen or surface) by conventional optics (such as a mirror 212 and lens 214) located in head 204. Similarly, an image which is electronically generated on an LCD panel may be projected by simply laying the panel on stage 210.

OHP 200 is especially useful in the latter application, since conventional LCD panels use absorptive polarizers which lead to heat management problems. Specifically, the use of absorptive polarizers raises the temperature of the liquid crystal material which changes its voltage response and, consequently, adversely affects image reproduction. By providing polarizing means under stage 210, there is no heat buildup directly adjacent the liquid crystal material and, furthermore, by providing a polarizer which is reflective rather than absorptive, there is essentially no heat buildup at all. This construction of OHP 200 is functional even if the LCD panel still uses an absorptive polarizer, since the light hitting that polarizer will already have been polarized by passing through retroreflecting polarizer **10** and thus will not lead to heat dissipation in the absorptive polarizer.

A further improvement in the design of OHP **200** is shown in Figure 5B, which is a magnified view of stage area **210**. In this embodiment, more layers have been laminated to the lower substrate of polarizer **10**, including a fresnel lens **216** whose lower surface **218** has a series of concentric grooves which serve to collimate the light from source **206**. Such collimation is particularly essential in projecting color images from an LCD panel, since many color panels have a stacked design (see U.S. Patent No. 4,917,465) which would result in parallax distortion of the image if the light were not collimated for passage through all of the liquid crystal layers in the stack. See also U.S. Patent No. 4,756,604. An additional fresnel lens (not shown) may be laminated to the upper substrate of polarizer **10** in order to focus the light toward head **204**; however, if OHP **200** is to be used only with LCD panels, then such an additional fresnel lens is unnecessary since the upper portion of the LCD panel typically includes such a lens.

The design of Figure 5 also illustrates the use of a quarter-wave plate **220** for recycling the reflected s-polarization component of the light. In the preferred embodiment, quarter-wave plate **220** is disposed between fresnel lens **216** and polarizer **10** with its birefringence axis rotated 45° with respect to the grooves in polarizer **10**. Quarter-wave plate **220** has essentially no effect on the unpolarized light emanating directly from light source **206**; however, when the s-polarization component is reflected, it immediately passes through plate **220** which changes it to circularly polarized light by phase shifting half of the light by 90°. If this reflected light is then redirected back toward stage **210**, it undergoes another 90° shift when it passes upwardly through plate **220**. The second 90° phase shift changes the light back from circularly polarized light to linearly polarized light, but with its polarization vector rotated by a total of 90°. In this manner, the recycled light has now been converted to p-polarization, and may easily pass through polarizer **10**. Experimentation has shown that, with the simple construction of Figure 5A, a 7% increase in light transmission was achieved by inserting the quarter-wave plate. The light is recycled by mirror **208**. Those skilled in the art will appreciate that even greater increases in light transmission may be achieved by devising a more complicated optical recycling system.

As an alternative to using the quarter-wave plate, a birefringent plate varying in optical thickness may be used as a spatial depolarizer. This means the recycled light will not be linearly polarized but, through reiterative reflection and depolarization, most of the light may be recycled.

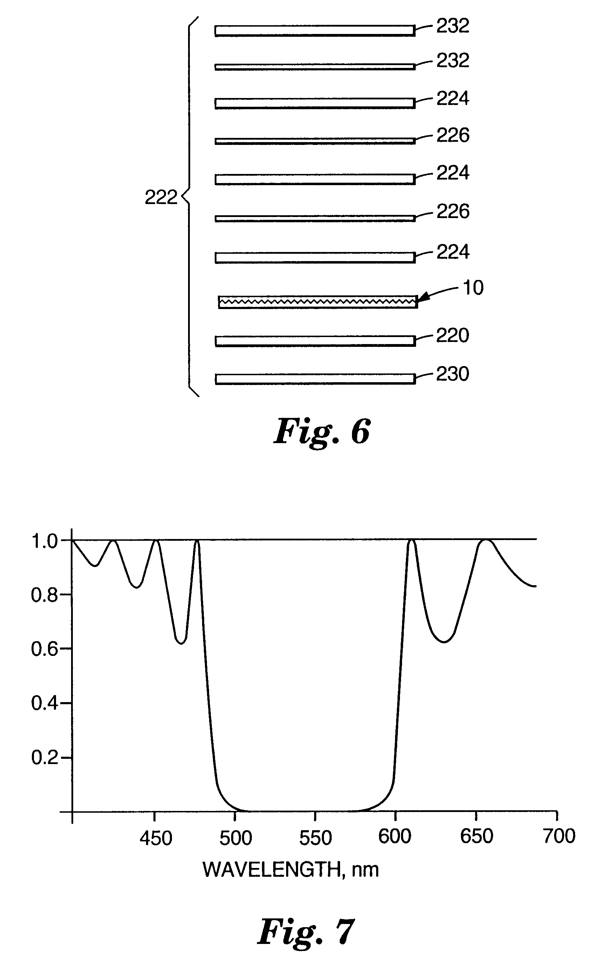

The present invention may also be directly applied to LCD panels. An exemplary panel **222** is shown in Figure 6. The illustrated panel is a color, stacked design having multiple layers **224** of liquid crystal material, multiple intermediate polarizers **226**, and an analyzer **228**; it is understood, however, that the following description applies equally well to a gray-scale LCD panel having only a single layer of liquid crystal material with no intermediate polarizers.

Like other conventional LCD panels, panel **222** also has a collimating fresnel lens **230** at the bottom of the stack, and a focussing fresnel lens **232** at the top of the stack. Figure 6 depicts the additional elements of the retroreflecting polarizer **10** and the quarter-wave plate **220**. With regard to these elements, the optical system operates essentially identically to that shown in Figure 5A, viz., diffuse light passing through panel **222** from the bottom of the stack to the top of the stack is first filtered by polarizer **10** to pass only p-polarized light and reflect the s-polarization component. Use of the optional quarter-wave plate allows for recycling of the s-polarized light as previously discussed.

LCD panel **222** may provide gray-scale imaging, simulated color (yellow/blue), or full color, and may be "passive" or "active matrix" (using an array of thin-film transistors), and further may use various types of liquid crystals, preferably supertwisted nematic crystals. Prior art panels are also equipped with their own (conventional) control electronics which convert the video signals from the source (computer) into data which can be transposed to the pixels in panel **222**. Additional components may be used to adjust contrast, intensity, color, etc., and allow remote control. Means may also be provided to keep the panel cool, such as cooling systems and/or use of cold filters as disclosed in U.S. Patent No. 4,763,993. An exemplary LCD panel is sold by 3M's Visual Systems Division under model number 4180.

For these applications, assuming a polycarbonate substrate of index $n_O = 1.586$, the ideal thin film indices of polarizer **10** are $n_H = 2.0$ and $n_L = 1.35$. With this pair of indices, the minimum composite optical stack for a photopic (i.e., covering the entire visible spectrum) retroreflecting polarizer is two sets of about eight layers each, i.e., $(HL)^4 + (H'L')^4$. One set has a bandwidth centered on 425 nm and the other has a bandwidth centered on 650 nm. In practice, one must use compatible thin film materials, such as silica ($SiO_2$) and titania ($TiO_2$). These have indices of 1.46 and 2.2, respectively, which cause some of the p-polarized light to be reflected as well as the s-polarized light since these indices are slightly higher than those prescribed by the MacNeille equation. If one uses the cryolite/zinc sulfide film pair (n = 1.34/2.2), then the entire visible spectrum can be covered with one stack of ten layers. These materials are easy to evaporate (ZnS sublimes) but are slightly hygroscopic, and may not have the desired stability if subjected to very humid environments.

Polarizer **10** may be further modified for use with color LCD panels such as that depicted in Figure 6. As noted in U.S. Patent No. 4,917,465, the first, or bottommost (i.e., closest to the light source) polarizer may be "dyed" or otherwise treated to impart a color tone to the light passing therethrough. It has been found that polarizer **10** may likewise be tuned to a particular color by selecting appropriate thin film materials. For example, Figure 7 shows a graph of the transmission of s- and p-polarized light through a magenta polarizer. This graph is based on computer modelling of a polarizer constructed in accordance with the present invention, utilizing 24 layers of thin film with alternating indices of refraction of 1.46 and 1.70. Thus, polarizer **10** may be used to replace the dichroic polarizers used in prior art color panels.

Although the invention has been described with reference to specific embodiments, this description is not meant to be construed in a limiting sense. Various modifications of the disclosed embodiment, as well as alternative embodiments of the invention, will become apparent to persons skilled in the art upon reference to the description of the invention. For example, polarizer **10** could be made even more selective by backing it up with an absorbing polarizer tuned to absorb any undesired leakage of s-polarized light, either across the entire spectrum or at a specified bandwidth. It is therefore contemplated that such modifications can be made without departing from the spirit or scope of the present invention as defined in the appended claims.

## Claims

1. An overhead projector having a base and a head attached to said base, said base having a light source proximate a stage area, and said head having means for projecting an image placed on said stage area, the improvement comprising:

   polarizing means located at said stage area for passing a p-polarization component of light from said light source and reflecting an s-polarization component of light from said light source.

2. The overhead projector of claim 1 wherein said polarizing means further includes means for retroreflecting said s-polarization component of said light.

3. The overhead projector according to claim 1 or 2 wherein said polarizing means comprises:

   a first substrate having a structured surface, said structured surface having a linear array of isosceles prisms arranged side by side;

   a second substrate substantially identical to said first material; and

   said structured surface of at least one of said substrates having at least one optical stack of alternating layers of high and low refractive index materials of selected optical thicknesses, said first and second substrates optically cemented together to form a single unit.

4. The overhead projector according to any one of claims 1 to 3 further comprising a quarter-wave plate interposed between said polarizing means and said light source.

5. The overhead projector according to any one of claims 2 to 4 further comprising means for converting said retroreflected s-polarization component of said light into p-polarized light.

6. A liquid crystal display panel having at least one layer of liquid crystal material and an analyzer adjacent said layer, the improvement comprising:

   polarizing means adjacent said liquid crystal layer, opposite said analyzer, for passing a p-polarization component of light from a light source and reflecting an s-polarization component of light from the light source.

7. The liquid crystal display panel of claim 6 wherein said polarizing means further includes means for retroreflecting said s-polarization component of said light.

8. The liquid crystal display panel according to claim 6 or 7 wherein said polarizing means comprises:

   a first substrate having a structured surface, said structured surface having a linear array of isosceles prisms arranged side by side;

   a second substrate substantially identical to said first material; and

   said structured surface of at least one of said substrates having at least one optical stack of alternating layers of high and low refractive index materials of selected optical thicknesses, said first and second substrates optically cemented together to form a single unit.

9. The liquid crystal display panel according to any one of claims 6 to 8 further comprising a quarter-wave plate adjacent said polarizing means, opposite said liquid crystal layer.

10. The liquid crystal display panel according to any one of claims 7 to 9 further comprising means for converting said retroreflected, s-polarization component of said light into p-polarized light.

11. A presentation system comprising:

an overhead projector having a base and a head attached to said base, said base having a light source proximate a stage area, and said head having means for projecting an image placed on said stage area;

a liquid crystal display panel having at least one layer of liquid crystal material and an analyzer adjacent said layer, said panel being generally disposed at said stage area of said overhead projector; and

polarizing means located between said liquid crystal layer and said light source for passing a p-polarization component of light from said light source and retroreflecting an s-polarization component of light from said light source.

**Fig. 1**

**Fig. 2**

**Fig. 3**

*Fig. 4*

EP 0 573 905 A1

**Fig. 5A**

**Fig. 5B**

*Fig. 6*

WAVELENGTH, nm

*Fig. 7*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,P,<br>Y<br>D,P,<br>A | WO-A-9 222 838 (MINNESOTA MINING AND MANUFACTURING)<br>* the whole document * | 1,6,11<br><br>2,3,7,8 | G02B27/28<br>G02B5/30<br>G02B5/12<br>G02F1/1335<br>G03B21/132 |
| Y | PATENT ABSTRACTS OF JAPAN<br>vol. 14, no. 398 (P-1097)28 August 1990<br>& JP-A-02 150 886 ( HITACHI ) 11 June 1990<br>* abstract * | 6 | |
| Y<br>A | EP-A-0 127 701 (DATELCARE)<br>* the whole document * | 1,11<br>6 | |
| A | JAPANESE JOURNAL OF APPLIED PHYSICS, PART II (LETTERS)<br>vol. 29, no. 4, April 1990, TOKYO JA<br>pages 634 - 637<br>BELAYEV ET AL 'Large Aperture Polarized Light Source and Novel Liquid Crystal Display Operating Modes' | 1,2,5-7,<br>10,11 | |
| P,A | EP-A-0 492 636 (CANON)<br>* the whole document * | 1-11 | **TECHNICAL FIELDS SEARCHED (Int. Cl.5 )**<br><br>G02B<br>G02F<br>G03B |

The present search report has been drawn up for all claims

| Place of search | Date of completion of the search | Examiner |
|---|---|---|
| THE HAGUE | 30 AUGUST 1993 | S.M WARD |